# DEMANDE DE BREVET EUROPEEN

(11) **EP 1 758 339 A2**
(43) Date de publication de la demande: **28.02.2007**
(21) Numéro de dépôt: 06115997.6
(22) Date de dépôt: 23.06.2006
(51) Int. Cl.: H04L 29/06

(54) **Procédé de transfert d'une communication au sein d'un réseau de communication à routage hiérarchique**

(30) Priorité: 30.06.2005 FR 0551833
(71) Demandeur: ALCATEL, 75008 Paris (FR)
(72) Inventeur: Gras, Laurence, 91440, Bures sur Yvette (FR); Rombeaut, Jean-Pierre, 59600, Maubeuge (FR)
(74) Mandataire: El Manouni, Josiane

(57) **Abrégé**

Un procédé de transfert de communication, pour un réseau IP à routage hiérarchique comprenant des premier (P1) et second (P2) points d'ancrage de mobilité connectés respectivement à des premier (R1) et second (R2) routeurs d'accès et à un agent mère (EA) d'un premier noeud mobile (T1) communiquant avec un second noeud (T2), consiste, en cas de détection du second routeur d'accès (R2) par le premier noeud mobile (T1), i) à déterminer le préfixe d'adresse du second routeur d'accès (R2), pour le communiquer au premier noeud mobile (T1) afin qu'il constitue des adresses temporaires additionnelles locale et régionale, ii) à communiquer l'adresse temporaire additionnelle locale au premier point d'ancrage (P1) pour qu'il établisse un tunnel provisoire (TU) avec le second routeur d'accès (R2) pour transmettre au second routeur d'accès (R2) les paquets destinés au premier noeud mobile (T1), iii) à connecter le premier noeud mobile (T1) au second routeur d'accès (R2) pour lui transmettre les paquets reçus via le tunnel provisoire (TU), et iv) à communiquer au second point d'ancrage (P2) et à l'équipement agent mère (EA) les adresses temporaires additionnelles locale et régionale du premier noeud mobile (T1) afin qu'ils les substituent aux précédentes.

## Description

L'invention concerne les réseaux de communication à protocole Internet (ou réseau IP) et à routage de type hiérarchique, et plus précisément les transferts de communications, impliquant au moins un équipement (de communication) mobile, entre des équipements d'accès de tels réseaux.

On entend ici par « réseau IP » une fédération de sous-ensembles de réseaux IP (ou sous-réseaux IP) raccordés les uns aux autres au moyen d'équipements d'accès formant des noeuds, tels que des routeurs d'accès.

Par ailleurs, on entend ici par « réseau IP à routage de type hiérarchique » un réseau IP dans lequel les communications entre un premier équipement (ou noeud) mobile et un second équipement de communication se font via un équipement agent assurant la fonction d'agent mère (ou natif) pour le premier équipement mobile, comme par exemple un routeur mère (ou natif), un point d'ancrage de mobilité (ou « Mobility Anchor Point »), comme par exemple un routeur, et un équipement d'accès radio, comme par exemple un routeur d'accès.

En outre, on entend ici par « équipement de communication mobile » (ci-après appelé équipement mobile), ou « noeud mobile » (« mobile node »), tout équipement de communication radio mobile (ou portable) capable de se connecter à son (sous-)réseau mère (ou sous-réseau natif, ou encore « home network (subnet) ») ou à d'autres sous-réseaux, dits distants ou externes (ou étrangers, ou encore « visited network »), afin d'échanger des données sous la forme de signaux avec un autre équipement de communication ou avec un sous-réseau. Il pourra donc s'agir, par exemple, de téléphones mobiles, ou d'ordinateurs portables ou d'assistants personnels numériques (ou PDA) équipés d'un module de communication.

Il est par ailleurs rappelé que chaque équipement mobile qui se raccorde à un réseau IP dispose d'une adresse IP mère (ou adresse IP native ou permanente, ou encore « home address ») qui correspond au préfixe du (sous-)réseau mère auquel il est habituellement connecté. Lorsqu'un équipement mobile est connecté à son réseau mère, les paquets de données (ou datagrammes) dont il est le destinataire sont directement adressés à son adresse IP mère au moyen d'un protocole de routage classique de type « saut par saut » (ou « hop by hop »). Lorsque cet équipement mobile se déplace et qu'il veut se connecter à un sous-réseau distant (ou exteme), il doit se configurer avec des adresses temporaires (ou complémentaires) locale et régionale, appelées « care-of addresses », constituées à partir d'un préfixe d'adresse fourni par le réseau IP, par exemple au moyen d'un mécanisme IPv6 conventionnel, tel qu'une auto-configuration avec ou sans état (ou « stateful or stateless »). Ces adresses temporaires doivent être associées à l'adresse IP mère lors d'une procédure d'enregistrement de lien (ou « binding update ») effectuée entre l'équipement mobile et son agent mère.

Comme le sait l'homme de l'art, il existe au sein des réseaux IP précités des protocoles de mobilité IP, comme par exemple MIPv6, chargés de rendre joignable à chaque instant un équipement mobile et d'assurer la continuité des communications en cours des équipements mobiles, notamment pendant les phases de transfert entre routeurs d'accès (plus connues sous le mot anglais « handover »). Ces protocoles permettent donc aux équipements mobiles de maintenir leur connectivité à l'Internet pendant un handover et de continuer de communiquer avec d'autres équipements après avoir changé leur point d'accès (ou d'attachement). Mais, ils nécessitent des opérations protocolaires et des échanges de signalisations qui introduisent une phase pendant laquelle l'équipement mobile n'est plus en mesure d'envoyer ou recevoir des paquets de données (ou datagrammes).

Une version rapide du protocole MIPv6 hiérarchique, appelée « F-HMIPv6 » (pour « Fast handover for Hierarchical MIPv6 ») a certes été proposée (sous la forme d'un projet (« draft ») auprès de l'organisme IETF) pour limiter la durée de cette phase d'impossibilité d'échange de paquets, mais elle ne concerne que les transferts de communication entre des premier et second équipements d'accès connectés à un même point d'ancrage de mobilité, c'est-à-dire les situations de micro-mobilité (mobilité limitée à un unique site (ou point d'ancrage), et donc caractérisée par des déplacements locaux). Elle n'est donc pas applicable aux transferts de communication entre des premier et second équipements d'accès connectés respectivement à des premier et second points d'ancrage de mobilité, c'est-à-dire les situations de macro-mobilité.

L'invention a donc pour but de remédier à l'inconvénient précité.

Elle propose à cet effet un procédé de transfert d'une communication, impliquant au moins un équipement mobile, entre des équipements d'accès radio connectés à des équipements (ou points) d'ancrage de mobilité (ou « Mobility Anchor Points ») différents, eux-mêmes connectés à un équipement agent (ou « home agent ») assurant la fonction d'agent mère (ou natif), au sein d'un réseau de communication à protocole Internet (IP) et à routage de type hiérarchique.

Ce procédé se caractérise par le fait qu'il consiste, chaque fois qu'un premier équipement mobile a établi avec un second équipement de communication une communication sur IP via l'équipement agent mère du premier équipement mobile, un premier point d'ancrage et un premier équipement d'accès radio, et lorsqu'en outre le premier équipement mobile détecte, lors d'un déplacement, un second équipement d'accès radio, connecté à un second point d'ancrage, lui-même connecté à l'équipement agent mère, à effectuer la combinaison d'étapes suivante :
i) déterminer le préfixe d'adresse du second équipement d'accès, pour le communiquer au premier équipement mobile afin qu'il constitue à partir de celui-ci des adresses temporaires (ou complémentaires) additionnelles locale et régionale,
ii) communiquer l'adresse temporaire additionnelle locale au premier point d'ancrage pour qu'il établisse un tunnel provisoire avec le second équipement d'accès, ou bien avec le second point d'ancrage, afin de permettre la transmission au second équipement d'accès des paquets destinés au premier équipement mobile,
iii) connecter le premier équipement mobile au second équipement d'accès afin de lui transmettre les paquets reçus via le tunnel provisoire, et
iv) communiquer, d'une part, au second point d'ancrage les adresses temporaires additionnelles locale et régionale du premier équipement mobile, et d'autre part, à l'équipement agent mère l'adresse temporaire additionnelle régionale du premier équipement mobile afin qu'il la substitue à la précédente.

Le procédé selon l'invention peut comporter d'autres caractéristiques qui peuvent être prises séparément ou en combinaison, et notamment :
- à l'étape i) le premier équipement mobile peut déterminer l'identifiant de réseau du second équipement d'accès puis communiquer cet identifiant de réseau au premier point d'ancrage afin qu'il détermine, d'une part, l'adresse IP globale associée du second équipement d'accès auprès d'un serveur du réseau, et d'autre part, le préfixe d'adresse du second équipement d'accès auprès de ce dernier ;
   ➢ à l'étape i), avant que le premier équipement mobile ne communique l'identifiant de réseau du second équipement d'accès au premier point d'ancrage, le premier équipement mobile peut signaler au premier équipement d'accès qu'il souhaite transférer la communication vers le second équipement d'accès désigné par son identifiant de réseau, puis le premier équipement d'accès peut éventuellement avertir le second équipement d'accès de ce souhait de transfert (cette procédure d'échanges est relative à la technologie radio, mais l'invention peut supporter des variantes de ces échanges dans lesquelles seule la communication de l'identifiant du second équipement d'accès à l'équipement mobile est nécessaire) ;
- à l'étape i) le premier équipement mobile peut constituer ses adresses temporaires additionnelles locale et régionale au moyen d'une procédure dite d'auto-configuration sans état (ou « stateless ») ;
- à l'étape ii) le premier équipement mobile peut communiquer son adresse temporaire additionnelle locale au premier point d'ancrage au moyen d'un message d'enregistrement de lien de type rapide (ou « fast binding update ») ;
- à l'étape ii) le premier point d'ancrage et le second équipement d'accès ou le second point d'ancrage peuvent établir le tunnel provisoire au moyen d'une procédure de transfert de communication (ou « handover ») ;
   ➢ à l'étape ii) le premier point d'ancrage peut transmettre au premier équipement mobile un message d'acquittement d'enregistrement de lien rapide une fois le tunnel établi;
- à l'étape iii), dans le cas d'une technologie d'accès radio de type WiMAX, le premier équipement mobile peut se connecter au second équipement d'accès au moyen d'une procédure dite de ré-entrée dans le réseau (ou « network re-entry »). D'autres procédures dépendant de la technologie radio du réseau d'accès peuvent être utilisées ;
- à l'étape iv) le premier équipement mobile peut communiquer au second point d'ancrage ses adresses temporaires additionnelles locale et régionale au moyen d'un message d'enregistrement de lien de type local (ou « local binding update »), puis le second point d'ancrage peut transmettre au premier équipement mobile un message d'acquittement d'enregistrement de lien une fois qu'il a mis à jour les adresses temporaires locale et régionale du premier équipement mobile avec ses adresses temporaires additionnelles locale et régionale ;
- à l'étape iv) le premier équipement mobile peut communiquer à l'équipement agent mère son adresse temporaire additionnelle régionale au moyen d'un message d'enregistrement de lien (ou « binding update »), puis l'équipement agent mère peut transmettre au premier équipement mobile un message d'acquittement d'enregistrement de lien une fois qu'il a mis à jour l'adresse temporaire régionale du premier équipement mobile avec son adresse temporaire additionnelle régionale.

L'invention propose également un point d'ancrage de mobilité agencé de manière à mettre en oeuvre une partie d'un procédé de transfert de communication du type de celui présenté ci-avant.

L'invention est particulièrement bien adaptée aux réseaux de type IPv6 (IP version n°6). Mais, elle concerne également les réseaux de type IPv4 supportant un routage hiérarchique, c'est-à-dire ayant un agent mère, des routeurs intermédiaires ayant une double fonction d'agent relais du réseau mère et d'agent mère d'un réseau local d'accès (fonctions équivalentes à celles d'un point d'ancrage de mobilité en IPv6), et des routeurs d'accès ayant une fonction d'agent relais pour le réseau local d'accès. On rappelle ici qu'en IPv4 on a un tunnel entre l'agent mère et un routeur intermédiaire et un tunnel entre le routeur intermédiaire et un routeur accès, ce dernier tunnel pouvant être modifié comme dans le cas IPv6 durant le handover.

D'autres caractéristiques et avantages de l'invention apparaîtront à l'examen de la description détaillée ci-après, et des dessins annexés, sur lesquels :
- la figure 1 illustre de façon très schématique une partie d'un réseau IP à routage hiérarchique selon l'invention, et
- la figure 2 illustre de façon schématique les principales opérations permettant de mettre en oeuvre un exemple de procédé de transfert de communication selon l'invention au sein du réseau IP à routage hiérarchique illustré sur la figure 1.

Les dessins annexés pourront non seulement servir à compléter l'invention, mais aussi contribuer à sa définition, le cas échéant.

L'invention a pour objet de permettre la réduction de la phase pendant laquelle un équipement de communication mobile (ou noeud mobile) n'est plus en mesure d'envoyer ou recevoir des paquets de données au cours d'un transfert de communication entre équipements d'accès radio connectés (ou rattachés) à des équipements (ou points) d'ancrage de mobilité différents, au sein d'un réseau de communication à protocole Internet (IP) à routage de type hiérarchique.

Dans ce qui suit, on considère à titre d'exemple non limitatif que le réseau IP est de type IPv6 et qu'il supporte, tout comme ses équipements de réseau et les équipements de communication mobile (ou noeuds mobiles) qui peuvent s'y connecter, le protocole de gestion de mobilité HMIPv6 (pour « Hierarchical Mobile IPv6 »). Mais, l'invention s'applique également aux réseaux IP de type IPv4, notamment.

Par ailleurs, on considère dans ce qui suit, à titre d'exemple non limitatif, que les équipements de communication mobiles (ci-après appelés équipements (ou noeuds) mobiles) sont des assistants personnels numériques (ou PDAs) équipés d'un module de communication, par exemple de type WiFi ou WiMAX - IEEE 802.1x. Mais, l'invention n'est pas limitée à ce type d'équipement mobile. Elle concerne en effet tout équipement de communication radio mobile (ou portable) capable de se connecter à son (sous-)réseau mère (ou natif, ou encore « home network ») ou à d'autres sous-réseaux, dits distants (ou externes, ou « visited networks »), afin d'échanger des données sous la forme de signaux avec un autre équipement de communication (fixe ou mobile) ou avec un sous-réseau. Il pourra donc s'agir d'un téléphone mobile ou d'un routeur ou encore d'un ordinateur portable équipé d'un module de communication.

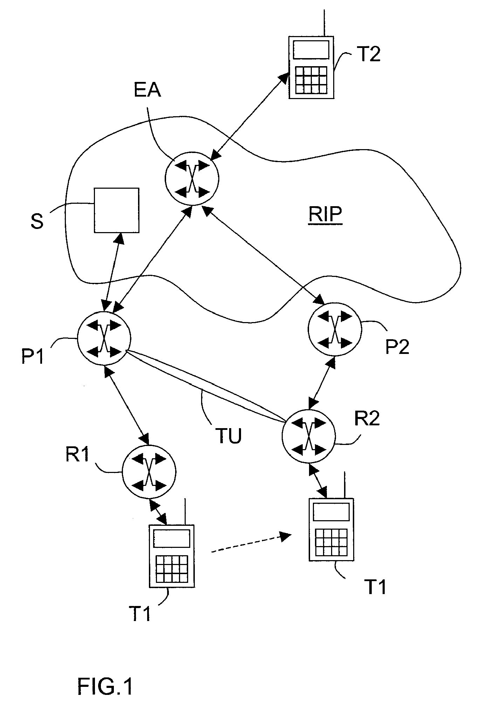

On se réfère tout d'abord à la figure 1 pour décrire schématiquement et brièvement un réseau IP à routage hiérarchique pouvant mettre en oeuvre le procédé de transfert de communication selon l'invention.

Un réseau IP peut être considéré comme une fédération de sous-ensembles de réseaux IP (ou sous-réseaux IP), ici matérialisée par le patatoïde référencé RIP, et comprenant généralement un sous-réseau principal (comme par exemple un réseau mère (ou natif)) d'au moins un noeud mobile T1, auquel sont raccordés d'autres sous-réseaux (ou réseaux d'accès).

On entend ici par « réseau mère (ou natif)» le sous-réseau auquel est habituellement connecté un noeud mobile T1, c'est-à-dire le sous-réseau auprès duquel il dispose d'une adresse IP mère (ou native) (ou « home address ») qui correspond à son préfixe.

Chaque noeud mobile est associé à un équipement agent mère EA, comme par exemple un routeur, appartenant à son réseau mère et constituant son agent mère (ou « home agent »). L'adresse IP mère d'un noeud mobile est enregistrée auprès de son agent mère. D'une manière générale, l'équipement agent mère AE stocke toutes les informations de position (et localisation) du noeud mobile qui lui est associé, c'est-à-dire les données de mobilité qui le concernent, et sert de lieu de transit des datagrammes qui doivent lui être transmis, lorsqu'il est connecté à un sous-réseau IP distant (ou « visited network »), différent de son réseau mère (comme c'est le cas dans l'exemple de la figure 1).

Parmi les données de mobilité stockées, il peut y avoir ce que l'homme de l'art appelle des adresses IP temporaires (ou complémentaires, ou encore « care-of addresses ») locale (LCoA) et régionale (RCoA). Ces adresses IP temporaires locale (LCoA) et régionale (RCoA) sont des adresses de routage de type « unicast » qui servent respectivement au routeur d'accès R1 (auquel est momentanément connecté un noeud mobile T1), et au point d'ancrage (de mobilité) P1 (auquel est connecté le routeur d'accès R1 et qui est connecté à l'agent mère EA du noeud mobile T1) pour joindre ledit noeud mobile T1. L'agent mère ne connaît que l'adresse temporaire régionale (RCoA) de chaque noeud mobile T1 qui lui est associé.

Les adresses IP temporaires locale (LCoA) et régionale (RCoA) sont déterminées par le noeud mobile T1 à partir du préfixe d'adresse (IP) du routeur d'accès auquel il est connecté, par exemple au moyen d'un mécanisme IPv6 conventionnel, tel qu'une auto-configuration avec ou sans état (ou « stateful or stateless »). Lorsqu'un noeud mobile T1 est effectivement connecté à un routeur d'accès R1 d'un sous-réseau distant, il doit prévenir son agent mère EA, afin qu'il enregistre son adresse IP temporaire régionale RCoA en correspondance de son adresse IP mère. Pour ce faire, il utilise une procédure d'enregistrement (ou « binding update») gérée par le protocole de mobilité (MIPv6). Grâce à cette adresse IP temporaire régionale RCoA un agent mère EA va pouvoir transmettre à un noeud mobile T1, qui lui est associé, les paquets de données (ou datagrammes) qu'un noeud appelant T2 lui a transmis à son adresse IP mère. Plus précisément, chaque paquet adressé à l'adresse IP mère d'un noeud mobile T1, momentanément connecté à un sous-réseau distant, est intercepté par son agent mère EA, puis transmis, via un tunnel (passant par le point d'ancrage P1 auquel est raccordé son routeur d'accès R1 et par ledit routeur d'accès R1), audit noeud mobile T1 à l'adresse IP temporaire régionale RCoA qui est associée (dans sa base de données) à son adresse IP mère.

L'invention propose un procédé de transfert de communication, impliquant un premier noeud mobile T1 et un second noeud T2 (éventuellement mobile), entre un premier routeur d'accès R1, auquel est momentanément connecté le premier noeud mobile T1 et qui est connecté à un premier point d'ancrage P1, lui-même connecté à l'agent mère EA du premier noeud mobile T1, et un second routeur d'accès R2, vers lequel se dirige le premier noeud mobile T1 et qui est connecté à un second point d'ancrage P2, lui-même connecté à l'agent mère EA du premier noeud mobile T2.

Ce procédé peut être mis en oeuvre au sein d'un réseau IP à routage hiérarchique RIP, d'une part, lorsque le premier noeud mobile T1 a établi avec le second noeud T2, une communication sur IP via son agent mère EA, le premier point d'ancrage P1 et le premier équipement d'accès R1, et d'autre part, lorsque le premier noeud mobile T1 a détecté en se déplaçant le second équipement d'accès R2.

A ce stade, le premier noeud mobile T1 est configuré avec des adresses temporaires locale LCoA-1 et régionale RCoA-1. Par ailleurs, l'adresse temporaire régionale RCoA-1 est, d'une part, stockée dans la base de données de l'agent mère EA en correspondance de l'adresse IP mère, et d'autre part, connue du premier point d'ancrage P1. En outre, l'adresse temporaire locale LCoA-1 est connue du premier routeur d'accès R1 et du point d'ancrage P1 (où elle est stockée en correspondance de l'adresse temporaire régionale RCoA-1).

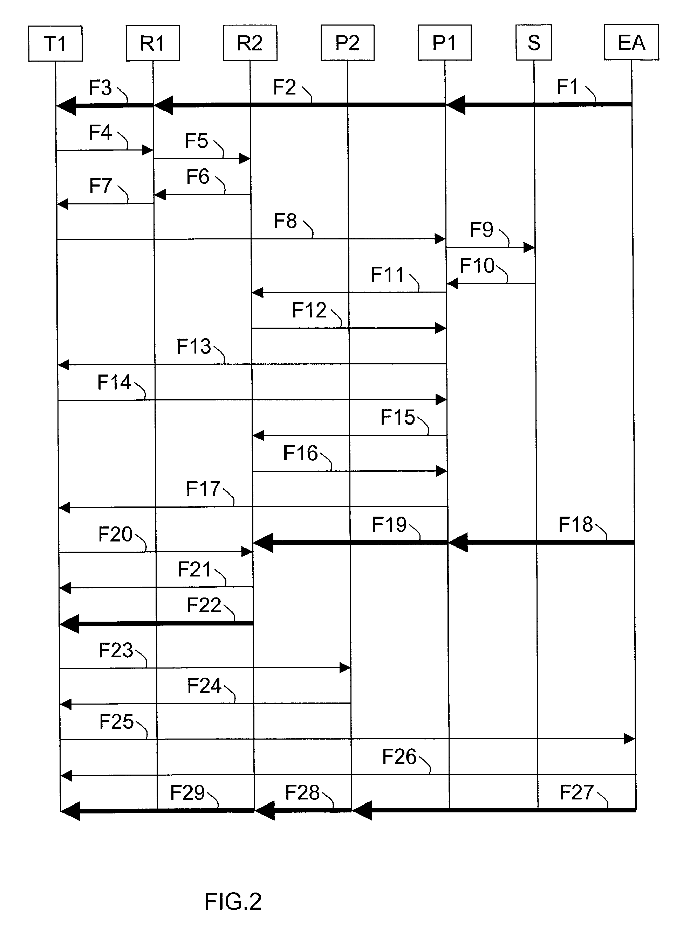

Le procédé selon l'invention consiste en une combinaison de quatre étapes successives qui vont être détaillées ci-après, en référence à la figure 2.

Sur la figure 2, les opérations du procédé débutent au niveau de la flèche F4. Les flèches F1 à F3 représentent la transmission de paquets issus du second noeud T2 (trafic descendant), respectivement entre l'agent mère EA du premier noeud mobile T1 et le premier point d'ancrage P1 (F1), puis du premier point d'ancrage P1 vers le premier routeur d'accès R1 (F2), et du premier routeur d'accès R1 vers le premier noeud mobile T1 (F3).

Dans une première étape i) (flèches F4 à F13), on détermine le préfixe d'adresse (IP) du second routeur d'accès R2, pour le communiquer au premier noeud mobile T1 afin qu'il constitue à partir de celui-ci des adresses temporaires additionnelles locale LCoA-2 et régionale RCoA-2. On peut également, et éventuellement déterminer l'adresse IP globale du second point d'ancrage P2 pour la communiquer au premier point d'ancrage P1, lorsque, comme on le verra plus loin, on établit un tunnel entre deux points d'ancrage (mais cette information d'adresse IP globale est toujours présente via le protocole utilisé).

Plus précisément, c'est le premier noeud mobile T1 qui détermine de préférence l'identifiant de réseau du second équipement d'accès R2 qu'il vient de détecter. Pour ce faire, le premier noeud mobile T1 peut par exemple transmettre (F4) au premier routeur d'accès R1 une requête de repositionnement de type « Relocation-REQ » afin de lui signaler qu'il veut procéder à un transfert de routeur d'accès. A réception de cette requête, le premier routeur d'accès R1 la transfère vers le second routeur d'accès R2 (F5). Lorsque le second routeur d'accès R2 reçoit cette requête de repositionnement de type « Relocation-REQ », il génère à destination du premier routeur d'accès R1 (F6) un message de réponse de type « Relocation-RSP », contenant son identifiant de réseau. Puis, à réception de ce message, le premier routeur d'accès R1 le transfère vers le premier noeud mobile T1 (F7). Il s'agit ici de messages radio entre le premier noeud mobile T1 et les équipements d'accès, et de messages dits « de niveau 2 » (et non IP) entre les deux équipements d'accès (liés à la technologie d'accès, par exemple WiMAX). Au cours de cet échange, le premier noeud mobile T1 prévient le premier équipement d'accès R1 du fait qu'il veut effectuer une procédure de handover vers le second équipement d'accès R2 (F4) ; ce message contient l'identifiant du second équipement d'accès R2. Puis, les premier R1 et second R2 équipements d'accès effectuent un échange pour confirmer le handover (F5, F6) ; et le premier équipement d'accès R1 confirme au mobile l'autorisation d'effectuer le handover (F7). Il est important de noter que ce processus d'échange de messages peut varier en fonction de la technologie radio concernée, l'important étant ici la récupération de l'identifiant du second équipement d'accès R2 par le premier noeud mobile T1.

Une fois que le premier noeud mobile T1 dispose de l'identifiant de réseau du second routeur d'accès R2, il le transmet au premier point d'ancrage P1 (F8). Pour ce faire, le premier noeud mobile T1 peut par exemple adresser au premier point d'ancrage P1 un message de type « avertissement proxy de sollicitation de routeur » (ou « Router Solicitation for Proxy advertisement ») RtSolPr, contenant l'identifiant de réseau déterminé.

A réception de ce message RtSoIPr, le premier point d'ancrage P1 détermine, d'une part, l'adresse IP globale qui est associée à l'identifiant de réseau qu'il contient (et qui désigne le second routeur d'accès R2), auprès d'un serveur S du réseau RIP, et d'autre part, le préfixe d'adresse du second routeur d'accès R2 auprès de ce dernier.

Pour ce faire, le premier point d'ancrage P1 peut par exemple adresser au serveur S (F9) une requête de recherche d'adresse IP globale de type « RequestIPAdd », contenant l'identifiant de réseau reçu. A réception de cette requête, le serveur S détermine l'adresse IP globale qui est associée à l'identifiant de réseau reçu, puis il transmet cette adresse IP globale au premier point d'ancrage P1 (F10). Le premier point d'ancrage P1 peut alors adresser au second routeur d'accès R2 (F11) un message lui demandant de transmettre son préfixe d'adresse. A cet effet, il peut par exemple transmettre un message de type « sollicitation de routeur distant » (ou « Remote Router Solicitation ») RemoteRouterSol. A réception de ce message, le second routeur d'accès R2 génère à destination du premier point d'ancrage P1 (F12) un message de réponse contenant son préfixe d'adresse et son adresse IP globale. Ce message est par exemple de type « Remote RA ». Puis, à réception du message de réponse, le premier point d'ancrage P1 génère à destination du premier noeud mobile T1 (F13) un message d'avertissement contenant le préfixe d'adresse du second routeur d'accès R2. A cet effet, le premier point d'ancrage P1 peut par exemple transmettre un message de type « avertissement de routeur proxy » (ou « Proxy Router Advertisement ») PrRtAdv.

Lorsque le premier noeud mobile T1 reçoit le préfixe d'adresse du second routeur d'accès R2 il peut alors constituer ses adresses temporaires additionnelles locale LCoA-2 et régionale RCoA-2. Pour ce faire, il peut par exemple utiliser une procédure dite d'auto-configuration sans état (ou « stateless ») AutoConf.

Dans une deuxième étape ii) (flèches F14 à F17), on communique l'adresse temporaire additionnelle locale LCoA-2 au premier point d'ancrage P1 pour qu'il établisse un tunnel provisoire TU (voir figure 1) avec le second routeur d'accès R2 ou avec le second point d'ancrage P2. Pour ce faire, on peut utiliser le protocole existant FMIPv6. Ce tunnel provisoire TU est destiné à permettre au premier point d'ancrage P1 de transmettre au second routeur d'accès R2 (directement ou indirectement) des paquets provenant du second noeud T2 et destinés au premier noeud mobile T1.

On considère dans ce qui suit, à titre d'exemple illustratif et non limitatif, que le tunnel provisoire TU est établi entre le premier point d'ancrage P1 et le second routeur d'accès R2. Mais dans une variante il pourrait être établi entre le premier point d'ancrage P1 et le second point d'ancrage P2, moyennant des adaptations élémentaires des opérations décrites ci-après.

Afin qu'un tunnel provisoire TU soit établi entre le premier point d'ancrage P1 et le second routeur d'accès R2, le premier noeud mobile T1 peut par exemple générer à destination du premier point d'ancrage P1 (F14) un message d'enregistrement de lien, de préférence de type rapide (ou « Fast Binding update» - mettant en oeuvre le protocole FMIPv6 pour la construction du tunnel), contenant son adresse temporaire additionnelle locale LCoA-2.

A réception de ce message d'enregistrement de lien (rapide) le premier point d'ancrage P1 initie une procédure d'établissement de tunnel auprès du second routeur d'accès R2. Pour ce faire, le premier point d'ancrage P1 peut par exemple transmettre au second routeur d'accès R2 (F15) un message d'initiation de handover de type « Handover Initiate ». A réception de ce message, le second routeur d'accès R2 dédie une entrée à l'adresse temporaire locale LCoA-2 du premier noeud mobile T1 et transmet au premier point d'ancrage P1 (F16) un message d'acquittement de handover de type « Handover Ack » afin de finaliser l'établissement du tunnel provisoire TU. Une fois le tunnel provisoire TU établi, le premier point d'ancrage P1 peut considérer l'adresse temporaire locale LCoA-2 du premier noeud mobile T1 comme sa nouvelle adresse temporaire locale. Il répond alors au message d'enregistrement de lien (rapide), qu'il a précédemment reçu du premier noeud mobile T1 (F14), en lui adressant un message d'acquittement d'enregistrement de lien de type « Fast Binding Ack » (F17).

A ce stade, et comme cela est illustré sur la figure 2, les paquets de données que le premier point d'ancrage P1 reçoit de l'agent mère EA (F18), ou qu'il avait reçus de ce dernier et qui étaient en attente dans une mémoire tampon, peuvent désormais être transmis au second routeur d'accès R2 via le tunnel provisoire TU (F19). Ils ne peuvent cependant pas encore être communiqués au premier noeud mobile T1.

Dans une troisième étape iii) (flèches F18 à F22), on connecte le premier noeud mobile T1 au second routeur d'accès R2 afin que ce dernier lui transmette les paquets de données (ou datagrammes) qu'il reçoit (ici directement) via le tunnel provisoire TU.

Pour ce faire, le premier noeud mobile T1 peut par exemple se connecter au second routeur d'accès R2 au moyen d'une procédure dite de ré-entrée dans le réseau (ou « network re-entry »). Il s'agit bien ici d'une ré-entrée dans le réseau puisqu'à ce stade la liaison entre le premier noeud mobile T1 et son premier routeur d'accès R1 n'est pas encore interrompue (ce processus est lié à la technologie radio concernée, par exemple WiMAX, mais il est transparent pour l'invention). Dans ce cas, le premier noeud mobile T1 adresse au second routeur d'accès R2 une requête de type « Network Re-Entry-Req » (F20). A réception de cette requête, le second routeur d'accès R2 génère à destination du premier noeud mobile T1 (F21) un message de réponse de type « Network Re-Entry-RSP » et procède à l'établissement de la liaison avec ledit premier noeud mobile T1.

A ce stade, et comme cela est illustré sur la figure 2, les paquets de données, que le second routeur d'accès R2 a reçu de l'agent mère EA via le tunnel provisoire TU (F18 et F19) et qui étaient en attente dans une mémoire tampon, peuvent désormais être transmis au premier noeud mobile T1.

Dans une quatrième étape iv) (flèches F23 à F29), on communique tout d'abord au second point d'ancrage P2 les adresses temporaires additionnelles locale LCoA-2 et régionale RCoA-2 du premier noeud mobile T1, puis on communique à l'agent mère EA l'adresse temporaire additionnelle régionale RCoA-2 du premier noeud mobile T1 afin qu'il la substitue à la précédente. Cela permet alors de mettre fin au tunnel provisoire TU.

Pour ce faire, le premier noeud mobile T1 peut par exemple transmettre au second point d'ancrage P2 (F23) un message d'enregistrement de lien de type local (ou « Local Binding update »), contenant ses adresses temporaires additionnelles locale LCoA-2 et régionale RCoA-2 (le protocole utilisé dans cette étape est de préférence HMIPV6). A réception de ce message, le second point d'ancrage P2 enregistre les adresses temporaires additionnelles locale LCoA-2 et régionale RCoA-2 dans sa base de données. Puis, il génère à destination du premier noeud mobile T1 (F24) un message d'acquittement d'enregistrement de lien de type « Binding Ack »), afin de lui signaler qu'il l'a enregistré.

Ensuite, le premier noeud mobile T1 peut par exemple transmettre à son agent mère EA (F25) un message d'enregistrement de lien (ou « Binding update »), contenant son adresse temporaire additionnelle régionale RCoA-2. A réception de ce message, l'agent mère EA met à jour sa base de données en remplaçant l'adresse temporaire régionale précédente RCoA-1 par l'adresse temporaire régionale additionnelle (et donc nouvelle) RCoA-2. Puis, il génère à destination du premier noeud mobile T1 (F26) un message d'acquittement d'enregistrement de lien de type « Binding Ack », afin de lui signaler qu'il a enregistré sa nouvelle adresse temporaire régionale RCoA-2.

Le transfert de communication en situation de macro-mobilité est alors terminé. Le tunnel provisoire TU est supprimé et, comme cela est illustré sur la figure 2, les paquets de données issus du second noeud T2 peuvent être transmis classiquement au premier noeud mobile T1 via l'agent mère EA (F27), le second point d'ancrage P2 (F28), et le second routeur d'accès R2 (F29).

Afin de permettre la mise en oeuvre du procédé selon l'invention, il faut d'adapter le module de contrôle des points d'ancrage de mobilité de l'art antérieur. Plus précisément, le module de contrôle doit être capable, d'une première part, de supporter momentanément deux adresses temporaires additionnelles locales LCoA-1 et LCoA-2 et deux adresses temporaires régionales RCoA-1 et RCoA-2 pour un même premier noeud mobile (cela est possible grâce, par exemple, au protocole HMIPv6), d'une deuxième part, de stocker dans une mémoire tampon dédiée des paquets de données destinés à un premier noeud mobile dans l'attente de l'établissement d'un tunnel provisoire, et d'une troisième part, d'initier des procédures de handover afin d'établir des tunnels provisoires avec des seconds routeurs d'accès ou d'autres points d'ancrage de mobilité. Il est rappelé que l'établissement d'un tunnel est défini dans le protocole FMIPv6 entre deux équipements d'accès, dans le cadre d'une micro-mobilité. Ici, la construction d'un tunnel se fait entre un point d'ancrage et un équipement d'accès (ou un autre point d'ancrage) dans le cadre d'une macro-mobilité, et l'invention propose pour ce faire de combiner les deux protocoles HMIPv6 et FMIPv6 afin d'optimiser le handover.

Le dispositif de contrôle adapté, d'un point d'ancrage de mobilité selon l'invention, peut être réalisé sous la forme de circuits électroniques, de modules logiciels (ou informatiques), ou d'une combinaison de circuits et de logiciels.

L'invention ne se limite pas aux modes de réalisation de procédé de transfert de communication et de point d'ancrage de mobilité décrits ci-avant, seulement à titre d'exemple, mais elle englobe toutes les variantes que pourra envisager l'homme de l'art dans le cadre des revendications ci-après.

Ainsi, dans ce qui précède on a décrit certains échanges radio (comme par exemple ceux de type « relocation » et « network re-entry ») et certains échanges entre équipements d'accès (comme par exemple ceux de type « relocation »), dans le cas d'une technologie d'accès radio de type WiMAX. Mais, d'autres échanges équivalents peuvent être envisagés pour d'autres technologies d'accès radio.

## Revendications

1. Procédé de transfert d'une communication, impliquant au moins un équipement mobile (T1), entre des équipements d'accès radio (R1,R2) d'un réseau de communication à protocole Internet (IP) à routage de type hiérarchique comprenant en outre des points d'ancrage de mobilité (P1,P2) et au moins un équipement agent (EA) assurant une fonction d'agent mère, **caractérisé en ce qu'**il consiste, lorsqu'un premier équipement mobile (T1) a établi avec un second équipement de communication (T2) une communication sur IP via un équipement agent mère (EA) dudit premier équipement mobile (T1), un premier point d'ancrage (P1) et un premier équipement d'accès (R1), et lorsque ledit premier équipement mobile (T1) détecte en se déplaçant un second équipement d'accès (R2), connecté à un second point d'ancrage (P2), lui-même connecté audit équipement agent mère (EA), à effectuer la combinaison d'étapes suivante :
i) déterminer le préfixe d'adresse dudit second équipement d'accès (R2), pour le communiquer audit premier équipement mobile (T1) afin qu'il constitue à partir de celui-ci des adresses temporaires additionnelles locale et régionale,
ii) communiquer ladite adresse temporaire additionnelle locale audit premier point d'ancrage (P1) pour qu'il établisse un tunnel provisoire (TU) avec ledit second équipement d'accès (R2) ou second point d'ancrage (P2) afin de transmettre audit second équipement d'accès (R2) les paquets destinés audit premier équipement mobile (T1),
iii) connecter ledit premier équipement mobile (T1) audit second équipement d'accès (R2) afin de lui transmettre lesdits paquets reçus via ledit tunnel provisoire (TU), et
iv) communiquer audit second point d'ancrage (P2) lesdites adresses temporaires additionnelles locale et régionale du premier équipement mobile (T1), puis communiquer audit équipement agent mère (EA) ladite adresse temporaire additionnelle régionale du premier équipement mobile (T1) afin qu'il la substitue à la précédente.

2. Procédé selon la revendication 1, **caractérisé en ce qu'**à l'étape i) ledit premier équipement mobile (T1) détermine l'identifiant de réseau dudit second équipement d'accès (R2) puis communique cet identifiant de réseau audit premier point d'ancrage (P1) afin qu'il détermine ladite adresse IP globale associée dudit second équipement d'accès (R2) auprès d'un serveur (S) dudit réseau (RIP), puis ledit préfixe d'adresse dudit second équipement d'accès (R2) auprès de ce dernier.

3. Procédé selon la revendication 2, **caractérisé en ce qu'**à l'étape i), avant que ledit premier équipement mobile (T1) ne communique l'identifiant de réseau dudit second équipement d'accès (R2) audit premier point d'ancrage (P1), ledit premier équipement mobile (T1) signale audit premier équipement d'accès (R1) qu'il souhaite transférer la communication vers ledit second équipement d'accès (R2) désigné par son identifiant de réseau.

4. Procédé selon la revendication 3, **caractérisé en ce qu'**à l'étape i), après que ledit premier équipement mobile (T1) ait signalé audit premier équipement d'accès (R1) qu'il souhaite transférer la communication vers ledit second équipement d'accès (R2) désigné par son identifiant de réseau, ledit premier équipement d'accès (R1) avertit ledit second équipement d'accès (R2) de ce souhait de transfert.

5. Procédé selon l'une des revendications 1 à 4, **caractérisé en ce qu'**à l'étape i) ledit premier équipement mobile (T1) constitue ses adresses temporaires additionnelles locale et régionale au moyen d'une procédure dite d'auto-configuration sans état.

6. Procédé selon l'une des revendications 1 à 5, **caractérisé en ce qu'**à l'étape ii) ledit premier équipement mobile (T1) communique son adresse temporaire additionnelle locale audit premier point d'ancrage (P1) au moyen d'un message d'enregistrement de lien de type rapide.

7. Procédé selon l'une des revendications 1 à 6, **caractérisé en ce qu'**à l'étape ii) ledit premier point d'ancrage (P1) et ledit second équipement d'accès (R2) ou second point d'ancrage (P2) établissent ledit tunnel provisoire (TU) au moyen d'une procédure de transfert de communication.

8. Procédé selon la combinaison des revendications 6 et 7, **caractérisé en ce qu'**à l'étape ii) ledit premier point d'ancrage (P1) transmet audit premier équipement mobile (T1) un message d'acquittement d'enregistrement de lien rapide une fois ledit tunnel provisoire établi (TU).

9. Procédé selon l'une des revendications 1 à 8, **caractérisé en ce qu'**à l'étape iii) ledit premier équipement mobile (T1) se connecte audit second équipement d'accès (R2) au moyen d'une procédure dite de ré-entrée dans le réseau.

10. Procédé selon l'une des revendications 1 à 9, **caractérisé en ce qu'**à l'étape iv) ledit premier équipement mobile (T1) communique audit second point d'ancrage (P2) ses adresses temporaires additionnelles locale et régionale au moyen d'un message d'enregistrement de lien de type local, puis ledit second point d'ancrage (P2) transmet audit premier équipement mobile (T1) un message d'acquittement d'enregistrement de lien après avoir mis à jour les adresses temporaires locale et régionale du premier équipement mobile (T1) avec lesdites adresses temporaires additionnelles locale et régionale.

11. Procédé selon l'une des revendications 1 à 10, **caractérisé en ce qu'**à l'étape iv) ledit premier équipement mobile (T1) communique audit équipement agent mère (EA) son adresse temporaire additionnelle régionale au moyen d'un message d'enregistrement de lien, puis ledit équipement agent mère (EA) transmet audit premier équipement mobile (T1) un message d'acquittement d'enregistrement de lien après avoir mis à jour l'adresse temporaire régionale du premier équipement mobile (T1) avec ladite adresse temporaire additionnelle régionale.

12. Point d'ancrage de mobilité (P1 ;P2) pour un réseau de communication à protocole Internet (IP) à routage de type hiérarchique, **caractérisé en ce qu'**il est agencé de manière à mettre en oeuvre une partie du procédé de transfert de communication selon l'une des revendications précédentes.

13. Utilisation du procédé de transfert de communication et du point d'ancrage de mobilité (P1 ;P2) selon l'une des revendications précédentes dans les réseaux de communication à routage hiérarchique de type MIPv6.
